# EUROPÄISCHE PATENTANMELDUNG

(11) **EP 4 276 434 A1**
(43) Veröffentlichungstag der Anmeldung: **15.11.2023**
(21) Anmeldenummer: 23162764.7
(22) Anmeldetag: 20.03.2023
(51) Int. Cl.: G01L 1/20, G01L 9/00

(54) **DRUCKSENSOR**

(30) Priorität: 11.05.2022 DE 102022204627
(71) Anmelder: ContiTech Techno-Chemie GmbH, 61184 Karben (DE)
(72) Erfinder: Borchert, Lukas, 30165 Hannover (DE); Linzmaier, Markus, 30165 Hannover (DE); Mattmann, Erich, 30165 Hannover (DE); Koch, Lukas, 30165 Hannover (DE)
(74) Vertreter: Continental Corporation

(57) **Zusammenfassung**

Die Erfindung betrifft einen Drucksensor (1), umfassend ein erstes Foliensubstrat (10) und ein auf das erste Foliensubstrat (10) aufgebrachtes zweites Foliensubstrat (12), die an Randbereichen derselben unter Zwischenlage einer Haftschicht (11) miteinander verbunden sind, wobei sie in unbelastetem Zustand voneinander beabstandet sind und ein Foliensubstrat (10) auf der dem anderen Foliensubstrat (12) zugewandten Oberfläche mit offenen, nicht durchgehend verlaufenden Leiterbahnen (100) versehen ist und das andere Foliensubstrat (12) auf der den Leiterbahnen (100) zugewandten Oberfläche mit einer elektrisch leitfähigen Beschichtung (120) versehen ist, die im belasteten Zustand mindestens eines Foliensubstrates (10, 12) die Leiterbahnen (100) kontaktiert und elektrisch leitend verbindet, wobei mindestens eines der Foliensubstrate (10, 12) auf Basis einer Keramikfolie gebildet ist.

## Beschreibung

Die Erfindung betrifft einen Drucksensor, umfassend ein erstes Foliensubstrat und ein auf das erste Foliensubstrat aufgebrachtes zweites Foliensubstrat, die an Randbereichen derselben unter Zwischenlage einer Haftschicht miteinander verbunden sind, wobei sie in unbelastetem Zustand voneinander beabstandet sind und ein Foliensubstrat auf der dem anderen Foliensubstrat zugewandten Oberfläche mit offenen, nicht durchgehend verlaufenden Leiterbahnen versehen ist und das andere Foliensubstrat auf der den Leiterbahnen zugewandten Oberfläche mit einer elektrisch leitfähigen Beschichtung versehen ist, die im belasteten Zustand mindestens eines Foliensubstrates die Leiterbahnen kontaktiert und elektrisch leitend verbindet.

Drucksensoren der eingangs genannten Art sind bekannt und werden beispielsweise zur Kraft- oder Druckmessung verwendet. Diese auch unter der Bezeichnung "FSR-Sensor" bekannten Sensoren umfassen üblicherweise zwei Foliensubstrate auf Basis von geeigneten polymeren Kunststofffolien, die übereinander angeordnet sind. Eine der Kunststofffolien ist auf der der anderen Kunststofffolie zugewandten Oberfläche mit einer graphithaltigen halbleitenden Paste beschichtet, die andere mit kammförmig ineinander verschachtelten elektrisch leitenden Kontaktgittern aus entsprechenden Leiterbahnen versehen, z.B. bedruckt. Diese sind jedoch elektrisch voneinander isoliert und haben externe Anschlüsse. Die beiden Folien werden mittels einer doppelseitigen Klebeschicht randseitig miteinander verbunden, wobei die Leiterbahnen innerhalb des von der Klebeschicht umschlossenen Bereiches angeordnet sind. Die Klebeschicht sorgt dafür, dass die beschichteten Bereiche der Folien sich im unbelasteten Zustand nicht berühren. Erst unter Einwirkung von Druck oder Kraft auf den Sensor werden die Leiterbahnen von der Paste kontaktiert und miteinander elektrisch verbunden. Der an den Enden der Leiterbahnen gemessene elektrische Widerstand nimmt dabei abhängig von der Belastung der Folien ab, da die Überbrückung der offenen Leiterbahnen durch die Paste belastungsabhängig zunimmt. Im Ruhezustand liegt dieser Widerstand bei einigen Megaohm (MΩ) und sinkt unter Last bis zur Sättigungsgrenze, die bei ca. 1 kΩ und einem Druck von 100 N/cm² liegt.

Nachteil dieser im Automobilbereich, in Peripheriegeräten von Rechnern, in medizinischen Applikationen und in Touchpads zur Erfassung von elektronischen Unterschriften häufig verwendeten Drucksensoren ist ihre nur mäßige Genauigkeit, die insbesondere auf die elastische Nachgiebigkeit der als Foliensubstrat eingesetzten polymeren Kunststofffolien zurückzuführen ist.

Aufgabe der Erfindung ist es daher, einen Drucksensor der eingangs genannten Art vorzuschlagen, der sich durch eine geringere Hysterese und verbesserte Messgenauigkeit auszeichnet.

Zur Lösung der gestellten Aufgabe wird erfindungsgemäß die Ausgestaltung eines Drucksensors gemäß den Merkmalen des Patentanspruchs 1 vorgeschlagen.

Vorteilhafte Ausgestaltungen und Weiterbildungen der Erfindung sind Gegenstand der abhängigen Ansprüche.

Der erfindungsgemäße Vorschlag sieht vor, dass mindestens eines der Foliensubstrate auf Basis einer Keramikfolie gebildet ist, die eine deutlich höhere Härte und geringere elastische Verformbarkeit als die bisher verwendeten polymeren Kunststofffolien aufweist und dem solchermaßen ausgebildeten Foliensubstrat entsprechende Eigenschaften verleiht.

Erfindungsgemäß kann sowohl ein Foliensubstrat, und zwar entweder dasjenige, welches mit den Leiterbahnen versehen ist, oder dasjenige, welches die elektrisch leitfähige Beschichtung aufweist, aus der erfindungsgemäß vorgesehenen Keramikfolie gebildet sein oder aber es werden beide Foliensubstrate aus derartigen Keramikfolien gebildet.

Die Keramikfolie, die im Rahmen der Erfindung zur Ausbildung des ersten und/oder zweiten Foliensubstrat verwendet wird, weist nach einem Vorschlag der Erfindung eine Dicke von etwa 0,1-0,3 mm auf.

Nach einem weiteren Vorschlag der Erfindung weist die Keramikfolie zur Ausbildung des ersten und/oder zweiten Foliensubstrates eine Biegefestigkeit von 700 bis 900 MPa, vorzugsweise etwa 800 MPa auf.

Nach einem weiteren Vorschlag der Erfindung kann auf die Haftschicht, welche zwischen den beiden Foliensubstraten angeordnet ist, um diese in Randbereichen zu verbinden, eine zusätzliche Isolationsschicht aufgebracht werden, die gemeinsam mit der Harzschicht zwischen den Foliensubstraten an deren Randbereichen angeordnet ist und dafür sorgt, dass die Foliensubstrate in unbelastetem Zustand voneinander beabstandet sind, sodass die offenen Leiterbahnen in diesem Zustand nicht durch die elektrisch leitfähige Beschichtung kontaktiert und insoweit überbrückt werden.

Die Gesamtdicke des erfindungsgemäßen Drucksensors liegt nach einem weiteren Vorschlag der Erfindung im Bereich von etwa 0,3 - 0,4 mm.

Die Leiterbahnen, die auf eines der Foliensubstrate aufgebracht, vorzugsweise aufgedruckt sind, können so angeordnet sein, dass eine einzelne Sensorfläche gebildet wird, oder aber die Anordnung ist derart gewählt, dass mehrere Sensorflächen gebildet werden, sodass beispielsweise Differenzmessungen zwischen den einzelnen Sensorflächen durchgeführt werden können, um zum Beispiel Druckverhältnisse zu bestimmen.

Mit dem erfindungsgemäßen Drucksensor können somit vielfältige Einzel- und Differenzmessungen, zum Beispiel Drücke, Kräfte etc. ermittelt werden.

Weitere Einzelheiten der Erfindung werden nachfolgend anhand eines Ausführungsbeispiels in der Zeichnung erläutert. Es zeigen:
- Figur 1: einen erfindungsgemäßen Drucksensor in einer schematisierten Seitenansicht;
- Figur 2: die Aufsicht auf die einzelnen Schichten des erfindungsgemäßen Drucksensors gemäß Figur.

Der dargestellte Drucksensor 1 umfasst ein unteres, erstes Foliensubstrat 10, welches auf Basis einer Keramikfolie in einer Dicke von 0,200 mm gebildet ist. Eine solche Keramikfolie kann z.B. eine Dichte von etwa 5,8 g/cm³, eine Oberflächenrauigkeit Rₐ von etwa 0,8 µm, eine Biegefestigkeit von 800 MPa, eine Ebenheit von 50µm, eine dielektrische Festigkeit bei 20 °C von mehr als 10 kV/mm und eine thermische Leitfähigkeit von 4,8 W/mK aufweisen.

Auf die Oberseite dieses Foliensubstrates 10 sind Leiterbahnen 100 aus einem elektrisch leitfähigen Werkstoff, beispielsweise Silber in einer Dicke von 0,001 mm aufgedruckt, die in herausgeführten Anschlussfahnen 101, 102 enden und in an sich bekannter Weise so angeordnet sind, dass sie einen offenen, unterbrochenen Verlauf aufweisen, d. h. bei Anschluss einer Stromquelle an den Anschlussfahnen 101,102 findet kein unmittelbarer Stromfluss durch die Leiterbahnen 100 statt.

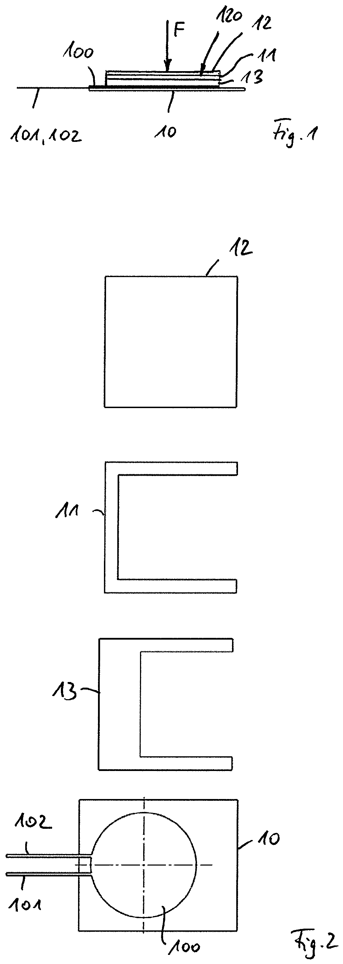

Auf das mit den Leiterbahnen 100 bedruckte Foliensubstrat 10 ist oberseitig eine Isolationsschicht 13 aus einem geeigneten Isoliermaterial in einer Dicke von etwa 0,020 mm aufgebracht, welches in der Aufsicht gemäß Figur 2 etwa U-förmig aufgebracht ist, sodass zwischen den U-Schenkelenden ein Freiraum verbleibt. In diesem Freiraum sind die Leiterbahnen 100 auf dem darunter befindlichen Foliensubstrat 10 positioniert.

Auf die Isolationsschicht 13 ist ebenso U-förmig in der Aufsicht eine Haftschicht 11 aus einem geeigneten Klebstoff aufgebracht, auf die oberseitig das zweite und hier obere Foliensubstrat 12 aufgebracht und über die Haftschicht und die Isolationsschicht 13 mit dem ersten Foliensubstrat 10 verbunden ist. Auch das erste Foliensubstrat 12 ist aus einer Keramikfolie gebildet.

Im Bereich der Unterseite des Foliensubstrats 12, d. h. den Leiterbahnen 100 zugewandt ist auf das Foliensubstrat 12 eine elektrisch leitfähige Beschichtung 120 in Gestalt einer Graphit enthaltenden Paste aufgebracht.

Der gesamte Aufbau des Drucksensors 1 weist eine Dicke von etwa 0,35 mm auf.

Da die Leiterbahnen 100 elektrisch nicht geschlossen sind und durch Zwischenlage der auch als Abstandshalter dienenden Isolationsschicht 13 und Harzschicht 11 die unterseitig am Foliensubstrat 12 aufgebrachte elektrisch leitfähige Beschichtung 120 im unbelasteten Zustand des Drucksensors 1 nicht in Kontakt mit den Leiterbahnen 100 treten, beträgt der Widerstand der Leiterbahnen 100 in diesem unbelasteten Zustand mehrere MΩ.

Sobald jedoch einer oder beide Foliensubstrate 10,12 durch eine anliegende Kraft F, beispielsweise eine Druckkraft belastet werden, kommt die elektrisch leitfähige Beschichtung 120 durch die sich einstellenden elastische Verformung der Foliensubstrate 10,12 mehr und mehr in Kontakt mit den Leiterbahnen 100 und kann die offenen Leitungsabschnitte der Leiterbahnen 100 elektrisch überbrücken. Je stärker die Verformung der Foliensubstrate 10,12 wird, desto stärker legt sich die elektrisch leitfähige Beschichtung 120 auf die Leiterbahnen 100, mit der Folge, dass der Widerstand bis zu einem Sättigungswert von etwa 1 kΩ abnimmt. Auf diese Weise können Kräfte und Drücke mit dem Drucksensor 1 gemessen werden.

Aufgrund der Ausbildung der Foliensubstrate 10,12 aus einer Keramikfolie mit einer gegenüber polymeren Kunststofffolien deutlich größeren Härte und Biegefestigkeit, die überdies vom Fachmann je nach Anwendungsfall ausgewählt werden kann, ermöglicht der vorangehend erläuterte Drucksensor 1 die Kraft- oder Druckmessung mit geringerer Hysterese und deutlich verbesserter Genauigkeit.

### Bezugszeichenliste:

- 1:: Drucksensor
- 10:: erstes Foliensubstrat
- 11:: Haftschicht
- 12:: zweites Foliensubstrat
- 13:: Isolationsschicht
- 100:: Leiterbahnen
- 101:: Anschlussfahne
- 102:: Anschlussfahne
- 120:: leitfähige Beschichtung

- F:: Kraft

## Patentansprüche

1. Drucksensor (1), umfassend ein erstes Foliensubstrat (10) und ein auf das erste Foliensubstrat (10) aufgebrachtes zweites Foliensubstrat (12), die an Randbereichen derselben unter Zwischenlage einer Haftschicht (11) miteinander verbunden sind, wobei sie in unbelastetem Zustand voneinander beabstandet sind und ein Foliensubstrat (10) auf der dem anderen Foliensubstrat (12) zugewandten Oberfläche mit offenen, nicht durchgehend verlaufenden Leiterbahnen (100) versehen ist und das andere Foliensubstrat (12) auf der den Leiterbahnen (100) zugewandten Oberfläche mit einer elektrisch leitfähigen Beschichtung (120) versehen ist, die im belasteten Zustand mindestens eines Foliensubstrates (10, 12) die Leiterbahnen (100) kontaktiert und elektrisch leitend verbindet, **dadurch gekennzeichnet, dass** mindestens eines der Foliensubstrate (10, 12) auf Basis einer Keramikfolie gebildet ist.

2. Drucksensor (1) nach Anspruch 1, **dadurch gekennzeichnet, dass** die Keramikfolie eine Dicke von 0,1 bis 0,3 mm aufweist.

3. Drucksensor (1) nach einem der Ansprüche 1 oder 2, **dadurch gekennzeichnet, dass** die Keramikfolie eine Biegefestigkeit von 700 bis 900 MPa aufweist.

4. Drucksensor (1) nach einem der Ansprüche 1 bis 3, **dadurch gekennzeichnet, dass** auf die Haftschicht (11) eine Isolationsschicht (13) aufgebracht ist, die gemeinsam mit der Haftschicht (11) zwischen den Foliensubstraten (10, 12) an deren Randbereichen angeordnet ist.

5. Drucksensor (1) nach Anspruch 4, **dadurch gekennzeichnet, dass** er eine Gesamtdicke von 0,3 bis 0,4 mm aufweist.

6. Drucksensor (1) nach einem der Ansprüche 1 bis 3, **dadurch gekennzeichnet, dass** die Leiterbahnen (100) so angeordnet sind, dass sie ein oder mehrere Sensorflächen definieren.
